# EUROPEAN PATENT SPECIFICATION

(11) **EP 2 540 166 B1**
(45) Date of publication and mention of the grant of the patent: **29.10.2014**
(21) Application number: 12186116.5
(22) Date of filing: 26.06.2008
(51) Int. Cl.: A23F 5/48, A23L 1/22, A23L 1/221, B01D 53/02

(54) **Apparatus for recovering odorous compounds**
Vorrichtung zur Isolierung von Duftverbindungen
Appareil de récupération de composés odorants

(30) Priority: 09.07.2007 IT MI20071369
(43) Date of publication of application: 02.01.2013
(62) Divisional of application: 08774339.9
(73) Proprietor: Illycaffè S.p.A., 34147 Trieste (IT)
(72) Inventor: Suggi Liverani, Furio, 34123 Trieste (IT); Brollo, Gaia, 34131 Trieste (IT); Lonzarich, Valentina, 34144 Trieste (IT); Alvarez Saavedra, Maria Cecilia, 1005 Lausanne (CH)
(74) Representative: Modiano, Micaela Nadia

(56) References cited:
- EP-A1- 0 010 804
- EP-A1- 0 353 806
- EP-A1- 0 992 274
- GB-A- 1 480 997

## Description

### Technical Field

The present invention relates to an apparatus for recovering odorous compounds from a gas originating from a process for treating a food product and to the related apparatus. More particularly, the present invention relates to an apparatus for recovering odorous compounds from the gas that originates from a process for treating roasted and/or ground coffee or cocoa or other food products.

### Background art

The background art regarding the recovery of odorous compounds which constitute the aroma of roasted and/or ground coffee or cocoa or from other food products provides complicated processes which involve several temperature ranges in order to condense in successive steps water, carbon dioxide, and finally the total aromatic fraction. Such steps, which are required in order to collect the aroma, are typically based on the presence of liquid nitrogen traps, which require systems being expensive and complex also in terms of their safe management. US Patent 4335149, for example, discloses the condensation of aromas recovered in a liquid nitrogen trap. Likewise, US Patent 5182926 discloses the condensation in liquid nitrogen of particles of aroma which are then separated from the water through a tubular porous filter.

The use of low temperatures to recover the aroma is disclosed for example in patent application US 20050112265, which deals with the use of a cryogenic condenser to condense gases and/or vapors of coffee in order to produce aromatic particles comprising a matrix of coffee which is soluble in water and an aromatic portion which originates from gases of coffee originating from different processes, such as vaporization of raw and roasted coffee beans, grinding of raw and roasted coffee beans and bean roasting. Finally, US Patent 5342638 discloses a process for the transfer of condensed coffee aroma, a so-called frost, to an oil.

In some cases, the coffee is also subjected to a thermal treatment in order to release a larger amount of volatile substances, therefore entailing a stress on the vegetable matrix which can then affect the quality of the final product. US Patent 5043177, for example, recovers aroma from ground coffee and transfers it to an adsorbent liquid, such as coffee oil. The vegetable material, especially coffee, is heated from 65 to 82°C. In other procedures known in the field, the coffee is wet and then heated to release vapors which are then sent to the cryocondensation areas. US Patent 6358552 provides for stripping of the coffee aroma from a mixture obtained by treating the ground product with an aqueous solution at 80-99°C, using certain organic compounds, such as furans and diketones, as indicators to assess the quality of the recovery process.

US Patent 4100305 resorts to steam stripping, by means of which the coffee is wet with water and placed in contact with steam at a certain pressure; the steam containing aroma is then condensed to produce a frost.

The methods known in the background art are characterized by relatively drastic operating conditions or by complex procedures, which accordingly cause the recovery of the odorous compounds that constitute for example the aroma of coffee to be particularly expensive.

Moreover, known processes do not focus attention on the release into the atmosphere of the high content of carbon dioxide and carbon monoxide of the gases that originate from coffee treatment processes, and therefore are not oriented toward the environmental aspect of the recovery process.

Finally, most known processes allow to recover the odorous compounds of aromas only in the form of a single fraction, without the possibility to divide the different components. When this is instead possible, problems such as the cost and complexity of the fractionation procedure are added to the other drawbacks cited earlier.

It is therefore necessary to provide a process which allows to recover the odorous compounds that constitute the aroma of the food products, such as for example coffee, simply and inexpensively Moreover, this process should be environmentally compatible and should allow equally simply and inexpensively to fractionate the odorous compounds of the aroma.

EP 0010804A1 discloses an apparatus comprising a cryocondensation device which has an inlet for a coffee grinder gas and an outlet for the cryocooled gas, and an absorption column containing flaked coffee.

### Disclosure of the Invention

The aim of the present invention is to provide a new process for recovering odorous compounds from a gas originating from a process for treating a food product which is capable of solving the problems cited above.

Within this aim, an object of the invention is to provide a method for recovering odorous compounds contained in the gas originating from a process for treating a food product by using process conditions which are bland particularly in terms of temperature and pressure.

Another object of the invention is to provide a process which reduces the introduction into the atmosphere of harmful gases such as carbon dioxide and carbon monoxide originating from the treatment of food products.

Another object of the invention is to provide a process in which fractionation of the collected aroma is achieved, so as to create a suitable aroma for a desired food-related application.

Moreover, an object of the present invention is to provide a process for recovering odorous compounds which is highly reliable, relatively easy to provide and at competitive costs.

In accordance with the invention, there is provided an apparatus for cryocondensation of aromas as defined in the appended claims.

### Brief Description of the Drawings

Further characteristics and advantages of the invention will become better apparent from the description of a preferred but not exclusive embodiment of the apparatus according to the invention, illustrated by way of non-limiting example in the accompanying drawings, wherein:
Figure 1 is a view of an apparatus for cryocondensation of aromas according to the invention;
Figure 2 is a view of an apparatus for cryocondensation of aromas according to the invention, according to a particular embodiment;
Figure 3 is a view of an apparatus for cryocondensation of aromas according to the invention for recovering odorous compounds from roasted, roasted and ground and/or stored coffee, according to a preferred embodiment;

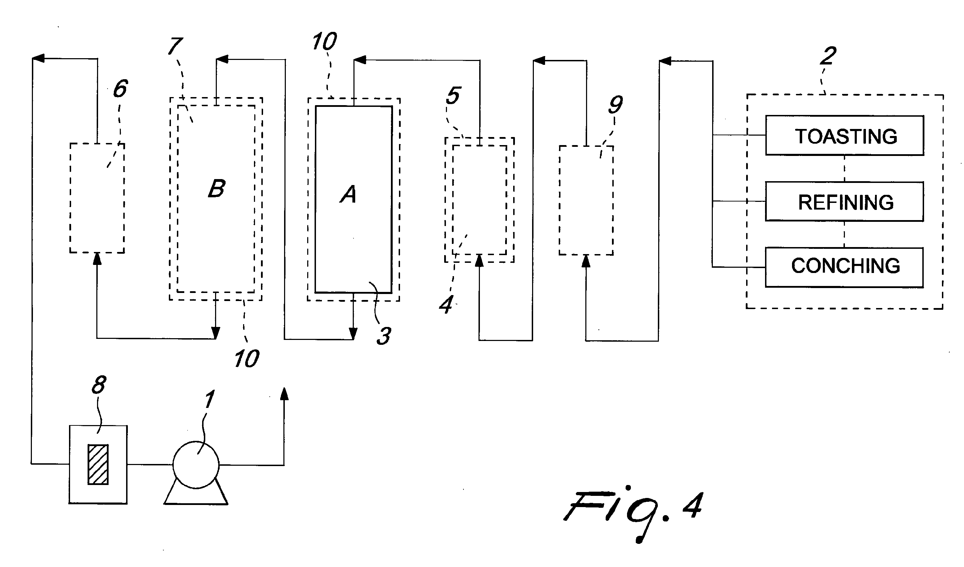

Figure 4 is a view of an apparatus for cryocondensation of aromas according to the invention for recovering odorous compounds from cocoa, according to a preferred embodiment;

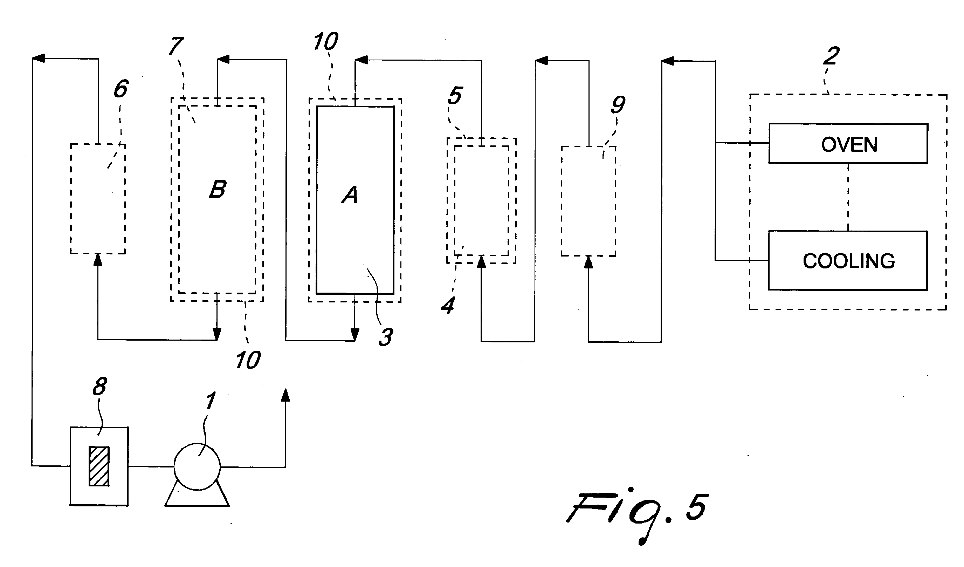

Figure 5 is a view of an apparatus for cryocondensation of aromas according to the invention for recovering odorous compounds from a bakery product, according to a preferred embodiment;

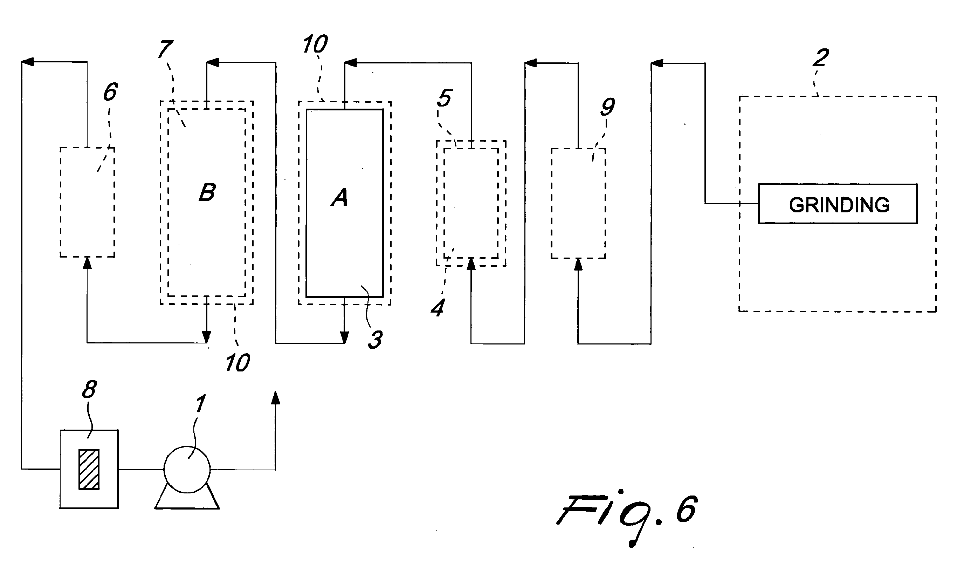

Figure 6 is a view of an apparatus for cryocondensation of aromas according to the invention for recovering odorous compounds from dried fruit, according to a preferred embodiment;

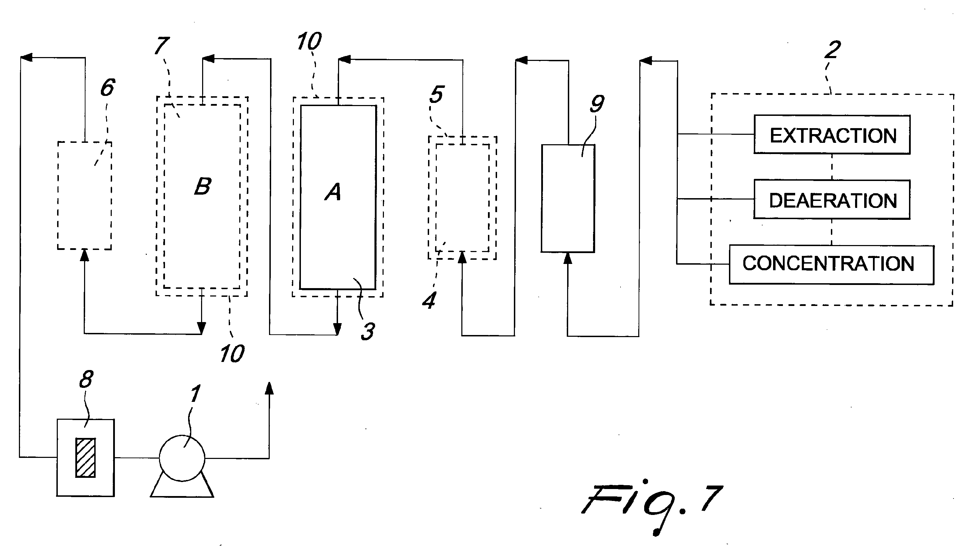

Figure 7 is a view of an apparatus for cryocondensation of aromas according to the invention for recovering odorous compounds from fresh fruit, according to a preferred embodiment.

Although the apparatus according to the invention has been conceived in particular to recover odorous compounds from a gas which originates from a process for treating coffee (roasting, grinding and storage), they can in any case be used more generally to recover odorous compounds or aromas from gases that originate from a process for treating food products. For example, the gases that originate from a process for treating a food product can be gases generated and/or released during steps such as roasting, grinding, storage, refining, conching, cooking and cooling, extraction, deaeration or concentration, or other processes for the treatment of food products.

An apparatus adapted to perform the cryocondensation of aromas according to the invention is constituted substantially by a modular system, in which the illustrated components can be connected one another by means of suitable interconnection means, such as for example valve couplings along a pneumatic circuit, so as to include or not the components needed on the basis of the origin of the gases generated by processes for treatment in input and of the chemical and physical characteristics of the processed matrices.

### Ways of currying out the Invention

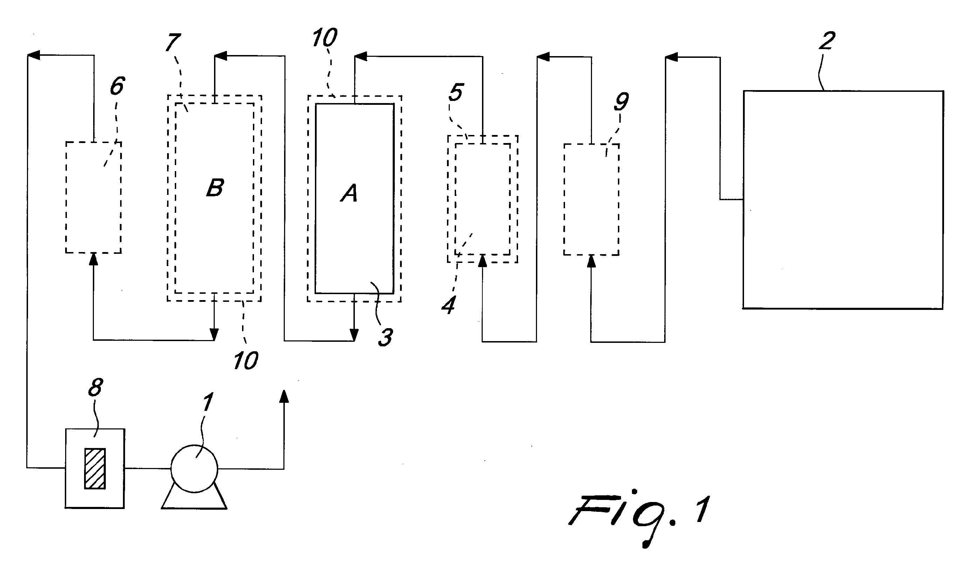

With reference to Figure 1, such apparatus comprises a vacuum pump 1 which is connected by means of a pneumatic circuit to a chamber 2, in which the gas that originates from processes for treating a food product is contained, so as to generate a partial vacuum in the chamber 2 and allow the gas contained therein to move through the apparatus.

As an alternative to the vacuum pump 1, it is possible to use another evacuation means to empty the chamber 2 of the gases that originate from a treatment process, for example a pump which injects under pressure into the chamber 2 an inert gas, such as for example nitrogen, which is capable of propelling the gases that originate from a treatment process through the several components arranged pneumatically in series within the apparatus.

The chamber 2, depending on the applications, can be a device for roasting (torrefying) coffee, a silo for storing roasted coffee, a device for grinding roasted coffee, a device for roasting cocoa beans, a device for refining cocoa, a device for conching, an oven for baking bakery products, a device for cooling bakery products, a device for grinding dried fruit, a device for extracting, deaerating or concentrating fruit or, in general, any device or container of an apparatus for food production wherein a gas which originates from a process for treating a food product can accumulate.

The vacuum or partial vacuum generated in the chamber 2 conveys the gas that arrives from a treatment process into the pneumatic circuit toward at least one adsorption column 3, which is connected pneumatically between the chamber 2 and the pump 1 and contains at least one solid food matrix A, onto which the odorous compounds that constitute the aroma of the food product are fixed.

The type of solid food matrix used influences the separation of the odorous compounds, since each of the usable matrices has a different selectivity with respect to the odorous compounds and therefore adsorbs preferentially the compounds with which it has a higher chemical and physical affinity. This may allow to perform a fractionated recovery of odorous compounds by using a plurality of columns arranged in series, each containing a different food matrix. Therefore, in accordance with this application, an embodiment of the apparatus according to the invention may contain at least one second adsorption column 7, which is connected pneumatically in series to the first column 3 and contains a second solid food matrix B which is different from the first solid food matrix A.

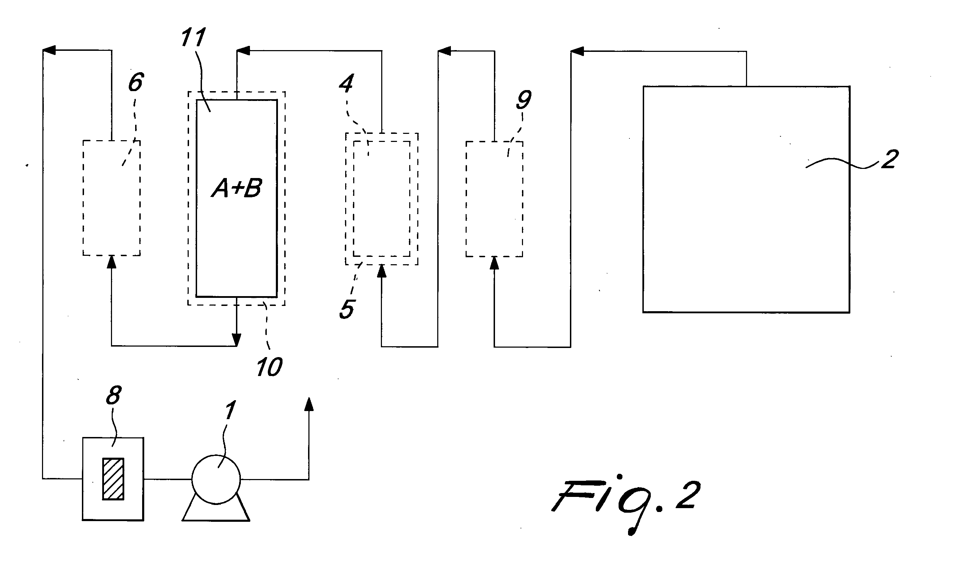

As an alternative, or as an addition, with reference to Figure 2, at least one adsorption column 11 may contain both a first solid food matrix A and a second solid food matrix B mixed together. In this manner it is possible to achieve recovery of the odorous compounds as a whole, without fractionation.

In an advantageous embodiment of the apparatus according to the invention, each adsorption column 3, 7 or 11 may be provided with a cooling jacket 10, which by decreasing the kinetic energy of the odorous substances facilitates their fixation on the food matrix and their stabilization. Typically, the temperature of the cooling jacket 10 has a value from 0 to 30°C, preferably from 5 to 20°C.

Generally, the odorous compounds recovered by the adsorption columns can subsequently be released from the matrices contained therein by solubilization and/or dissolution of said matrices.

An adsorption column for carbon dioxide 4 is provided, so that the carbon dioxide contained in the gas that arrives from processes for treating the food product may be removed. By way of the modularity of the apparatus, such adsorption column for carbon dioxide 4 may be inserted upstream of the adsorption columns 3,7 for odorous compounds or downstream thereof, and in any case upstream of any adsorption column for carbon monoxide 6 along the pneumatic circuit that connects the columns 3,7 in series to the chamber 2 and to the pump 1.

The adsorption column for carbon dioxide 4 is inserted in the apparatus when the nature of the food matrix requires the removal of the carbon dioxide for efficient operation. For some food matrices, the presence of CO₂ has an important role in the quality of the result. The adsorption column 4 contains an adsorbent matrix which is specific for carbon dioxide and blocks the molecule by way of a chemical or physical mechanism. Such matrix can be selected from the group that comprises ascarite, soda lime, sodium hydroxide on granular silica (decarbite®), a natural zeolite, aluminum oxide, a clay, an activated charcoal and silica. In particular, the natural zeolite can be for example mordenite or erionite. Moreover, the clay can be an activated clay.

Advantageously, the adsorption column for carbon dioxide 4 may be provided with a cooling jacket 5 which absorbs any heat generated by the exothermic reaction for adsorption of carbon dioxide.

Moreover, the adsorption column for carbon dioxide 4 is comprised in an apparatus for cryocondensation of aromas, comprising a cryocondensation device which has an inlet for a gas which arrives from a process for treating a food product and an outlet for a cryocondensed gas derived from said input gas. The adsorption column for carbon dioxide is connected to said inlet of the cryocondensation device so as to remove the carbon dioxide from said input gas.

As anticipated earlier, downstream of the adsorption columns 3,7 for the odorous compounds, but upstream of the vacuum pump 1, the apparatus may further comprise the adsorption column for carbon monoxide 6. This gas is present in a significant volumetric concentration in the process gases of roasted and/or ground coffee and is known to be a gas which is harmful for human beings due to its ability to form stable complexes with blood hemoglobin. The adsorption column for carbon monoxide contains an adsorbent matrix which is specific for this gas. Such matrix may be selected from the group comprising hemoglobin, a zeolite, catalase, myoglobin, a cytochrome and drierite.

The apparatus may also comprise a system for protecting the pump 1, such as for example a liquid nitrogen trap 8.

Finally, a device for removing water vapor 9 may be integrated directly downstream of the chamber 2 that contains the gases that originate from a process for treating a food product, in order to remove the water in water vapor form that might be present in the gas before the adsorption columns. Such device may be for example a coil condenser.

In another embodiment, the apparatus according to the invention may comprise a device (not shown) selected from the group comprising a granulator, an encapsulator, a microencapsulator, a nanoencapsulator and a melt-extrusion device. In this manner it is possible to combine with the technology for recovering odorous compounds a technique for stabilizing the food matrix that allows to prepare granulates, encapsulates, microencapsulates, nanoencapsulates or agglomerations containing the recovered odorous compounds.

The apparatus for recovering the odorous compounds according to the invention operates as follows. The vacuum pump 1 generates a partial vacuum in the chamber 2, which displaces the gas that arrives from a process for treating the food product toward the series of adsorption columns, each of which contains at least one solid food matrix, on which the odorous compounds contained in the gas are adsorbed by direct contact of the solid matrix with said gas. The expression "direct contact" is understood to mean that the isolation of the odorous compounds, i.e., of the fraction of aroma of the gas, occurs without passing through intermediate stages, for example without passing through a condensation stage.

Subsequently, the vacuum pump 1 releases the residual gas into the atmosphere.

Conveniently, the process described herein may be performed by working at ambient temperature, without resorting to extreme temperatures. Moreover, the process may be performed by applying downstream of the apparatus a partial vacuum so that the pressure inside the chamber 2 is lower than atmospheric pressure, for example approximately 50 kPa (500 millibars) lower than atmospheric pressure 100 kPa (1000 millibars). Of course, the person skilled in the art is capable of selecting without difficulty the type of pump 1 that is most appropriate to create in the chamber 2 the desired pressure depending on the size of the apparatus.

Advantageously, the food product from whose processing the gas containing the odorous compounds is obtained may be selected from the group comprising roasted coffee, roasted and ground coffee, roasted cocoa, roasted and ground cocoa, roasted nuts, bakery products and fruit.

The expression "solid food matrix" is understood to reference an edible material in the form of powder, paste (where the term "paste" designates a mass constituted by water and solid food ingredients), a mass which is solid at the process temperature (for example 24°C) and optionally melts at higher temperatures or a liquid carried on a solid support (in this case, the adsorbent agent would be the liquid).

A plurality of solid food matrices has been evaluated for use in the process described here: such matrices have been selected from the group comprising a starch, a cyclodextrin, a maltodextrin, microcrystalline cellulose, carboxymethyl cellulose, an alginate, a carrageenan, gum arabic, coconut oil, roasted and ground coffee, soluble coffee, cocoa in powder, soluble preparations of cocoa in powder, powdered milk and mixtures thereof.

Several starches exist depending on their different origin and therefore in the process according to the invention the starch may be selected from the group comprising a wheat starch, a corn starch, a rice starch, a potato flour starch, and a manioc flour starch. Moreover, the starch may be a modified starch, such as for example a pre-gelatinized starch, a fluidified starch, a cross-linked starch or a stabilized starch.

A cyclodextrin is a starch degradation compound obtained through bacterial means and characterized by the ability to form inclusion complexes with a large variety of molecules. Different forms of cyclodextrin exist, which differ from each other in the number of glucose units that constitute them. In the process according to the invention, the cyclodextrin may be constituted by a number of glucose units from 6 to 12; for example, it may be constituted by 7 glucose units (β-cyclodextrin).

A carrageenan is a hydrocolloid compound extracted from seaweed of the Rhodophyceae family, whose use is known in the food industry. For example, in the process according to the invention the solid food matrix may be a carrageenan selected from the group comprising a kappa carrageenan, an iota carrageenan and a lambda carrageenan.

Advantageously, the apparatus according to the invention may also use soluble coffee as a solid food matrix for adsorbing the odorous compounds. For example, the soluble coffee may be in the form of powder, pellets or granules. The soluble coffee, which in output from the production process is usually poor in aromas, is thus enriched with odorous compounds by direct contact with the gas that arrives from a treatment process, particularly the gas that arrives from the process for roasting, grinding or storing coffee.

Advantageously, the apparatus according to the invention may also use cocoa powder or soluble preparations thereof as a solid food matrix for adsorption of the odorous compounds. The cocoa powder, or its soluble preparation, in this manner is enriched with odorous compounds by direct contact with the gas that arrives from the cocoa roasting, grinding or conching process.

The apparatus according to the invention further comprises the step of eliminating the carbon dioxide from the gas that arrives from a treatment process before or after adsorption of the odorous compounds, when the efficiency of the food matrix used in the column is greater, in the absence of carbon dioxide. This allows to improve the adsorption yield of the columns with solid food matrix. Conveniently, the elimination of carbon dioxide occurs, as shown, by adsorption on a specific matrix for carbon dioxide. Such matrix may be selected from the group comprising ascarite, soda lime, decarbite®, a natural zeolite, aluminum oxide, a clay, an activated charcoal and silica. In particular, the natural zeolite may be for example mordenite or erionite. Moreover, the clay may be an activated clay.

In another advantageous embodiment, the apparatus according to the invention may further comprise eliminating the carbon monoxide from the gases that originate from a process for treating the food product after the step for adsorption of the odorous compounds; this allows to avoid releasing into the atmosphere the carbon monoxide, which is particularly harmful for health. The elimination of carbon monoxide occurs by adsorption on a matrix which is specific for carbon monoxide. Such matrix may be selected from the group comprising hemoglobin, a zeolite, catalase, myoglobin, a cytochrome and drierite.

In another advantageous embodiment, the apparatus according to the invention may further comprise eliminating any water vapor that is present in the gases that originate from a process for treating a food product.

The use as a food ingredient of a solid food matrix on which one or more odorous compounds are adsorbed allows to utilize the solid matrices used in the process according to the invention to disperse in a food product the odorous compounds that are trapped within such matrix. For this purpose, the solid food matrix may be selected from the group comprising a starch, a cyclodextrin, a maltodextrin, microcrystalline cellulose, carboxymethyl cellulose, an alginate, a carrageenan, gum arabic, coconut oil, roasted and ground coffee, soluble coffee, cocoa powder, soluble preparations of cocoa powder, milk powder and mixtures thereof.

The starches into which the odorous compounds have been adsorbed with the process according to the invention may therefore be used conventionally in the food industry both as nutritional ingredients and as thickening, binding, stabilizing or gelatinizing agents. In particular, if the matrix contains pre-gelatinized starches, as a consequence of the adsorption of the odorous compound such starches may be used to prepare bakery products (biscuits), confectionery garnishes, sweets and cold puddings. If the matrix contains fluidified starches, once the odorous compounds have been adsorbed, such starches may be used to coat sweets, for biscuit glaze, or as emulsifiers. The cross-linked starches, after adsorption of the odorous compounds according to the invention, may be applied in food products that are packaged in sterilized boxes, creams and desserts. The stabilized starches, after adsorption of the odorous compounds according to the invention, may instead be used as thickening agents for garnishes for fruit cakes.

Cyclodextrins, particularly β-cyclodextrin, after adsorption of odorous compounds by means of the process according to the invention has occurred, may be used in the food sector to include aromas and essences and improve their stability by changing their state of aggregation from liquid to solid, in order to stabilize vitamins and neutralize the taste of bitter substances.

Maltodextrins may be used in the food industry as a carrier, for example for aromas, as encapsulating agents for different food ingredients, such as sweeteners. Moreover, since maltodextrins have functional properties as viscosity, texture and mouthfeel optimizers, they can prevent crystallization and bind water. The maltodextrin matrices in which the odorous compounds have been adsorbed with the process according to the invention may be applied therefore in candies, jelly gums, beverages, isotonic beverages, in the glaze of bakery products and in extruded snacks, in milk-based products and ice creams, in coffee toppings, imitation cheeses, powdered mixtures for beverages, frozen foods, in meat and for encapsulating aromas.

Carboxymethyl cellulose and microcrystalline cellulose may be used as sources of fiber in diet products, as non-caloric thickening agents, as stabilizers, opacifiers, carriers, anti-agglomeration agents or adjuvants in the extrusion process. Among the food-related applications wherein the carboxymethyl cellulose and/or microcrystalline cellulose matrices onto which the odorous compounds have been adsorbed with the process according to the invention may be used, include chocolate beverages, glazes, creams, toppings, desserts and ice creams.

Alginates have properties of thickening, stabilizing, gelling agents and adjuvants in the formation of films. They keep a suspension uniform, improve its appearance and consistency, improve mouthfeel and stabilize emulsions. Therefore, the matrices of alginates in which the odorous compounds have been adsorbed with the process according to the invention may be applied in several foods, such as bakery and confectionery products, glazes, food emulsions, fruit juices, beverages, fruit fillings, ice creams and sorbets, fruit syrups and chocolate, spreadable preparations with a low fat content, yogurts, powder preparations and frozen foods.

Carrageenans perform several functions, allow to bind moisture (retain water), stabilize emulsions, suspend particles, control rheological properties, produce gels which are stable at ambient temperature. A carrageenan matrix in which the odorous compounds have been adsorbed with the process according to the invention may be used in confectionery products or other water-based elements as a gelling and stabilizing agent. Moreover, it may be used in the dairy industry as a gelling, texturizing and stabilizing agent, for example in sweets based on milk, flans, puddings, aromatized milk, coffee cream, milk with chocolate and ice creams. Moreover, the matrix may be used in jams with low sugar content, in sugared almonds to form the coating/icing, in syrups and toppings to give viscosity, in bread and in soya-based products as stabilizers and texturizers. Optionally, the matrix containing carrageenans may also be used in animal feed, in the pharmaceutical field, in the cosmetic field, in products for oral hygiene and household products.

Since gum arabic is an important ingredient in alcohol-free beverages and in gummy candies, where its main function is to prevent crystallization of sugars, the gum arabic matrix in which the odorous compounds are adsorbed by means of the process according to the invention may be used for the same purposes as traditional gum arabic, as well as an excipient in the food industry, or as an emulsifier and stabilizer in bakery products, as a foam stabilizer in beverages and to fix aromas in the production of encapsulates and aromas in powder.

Soluble coffee (powder, pellets or in granular form) may be used specifically as a matrix for adsorbing aromas originating from the coffee roasting/grinding/storage process. The soluble coffee, which in output from its production process is usually poor in aromas, with the process according to the invention is enriched with odorous compounds by direct contact with the gas. The soluble coffee may thus be used in the food sector for the instant preparation of beverages and as an aromatizing ingredient for ice creams and semi-processed ingredients for ice creams, desserts and sweets to be eaten with a spoon (puddings and creams), bakery products (cakes and biscuits), chocolates and beverages based on cocoa, yogurt, candies and jellies. The soluble coffee is thus enriched in a natural manner, allowing to save on the use of natural or artificial flavors which would have to be added in the final production steps to increase sensory impact. The roasted and ground coffee itself may also be used as an adsorbent for the aroma contained in the process gases of the roasted bean. This allows to enrich a coffee which, as a consequence of inadequate treatment processes, has undergone a reduction in its natural and inherent aroma content.

Cocoa in powder (or soluble preparations thereof) also may be used as a solid food matrix to adsorb odorous compounds. Cocoa in powder or a soluble preparation thereof is thus enriched with odorous compounds by direct contact with the gas arriving from the cocoa roasting, grinding or conching process. There are several applications in the food field for enriched cocoa powder or its enriched soluble preparations ranging from instant-preparation cocoa-based beverages (hot chocolate) to confectionery products (sweets to be eaten with a spoon, creams, puddings, ice creams and semi-processed ingredients for ice creams), to confectionery (candy, chocolate drinks, chocolate candy), to liqueurs, bakery products, doughs. Similarly to soluble coffee, enrichment of cocoa powder may allow to dispense with the use of aromas to be added to enhance sensory impact during consumption for cocoa powder as well.

Skimmed or whole milk powder may be reconstituted and drunk as is, especially to supply milk to scarcely supplied regions with limited transportation costs. As an alternative, it may be used in the food or pharmaceutical industry. It may be used for the preparation of infant formulas, milk chocolate, candies and beverages. Its use is allowed in the production of food preparations, in the production of ice creams, in the production of sausages and other industrial products, such as cheeses of the so-called "cream cheese" type, spreadable products, bakery products (cakes, biscuits, bread).

### EXAMPLE

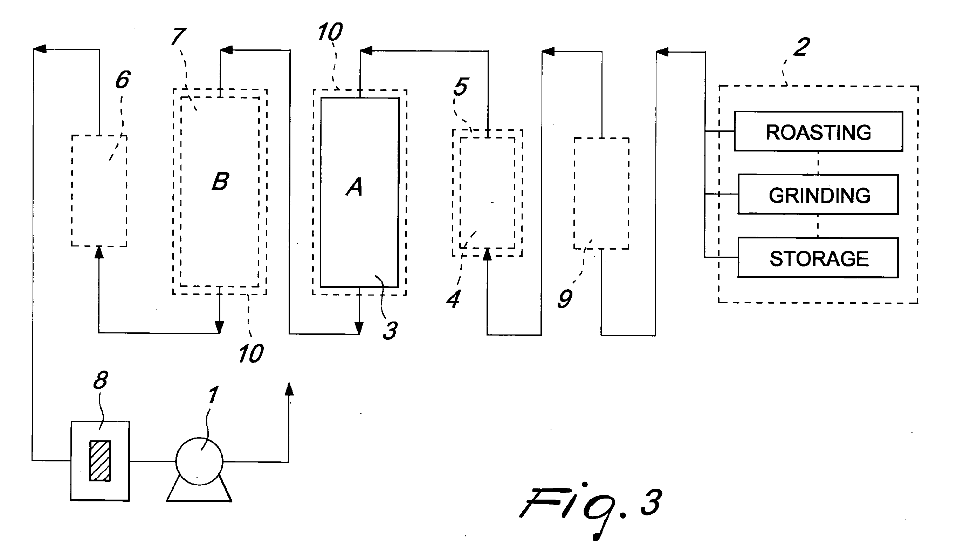

The gas that arrives from the step for grinding roasted coffee beans is made to flow within a series of columns loaded with respective food matrices in the form of powder or paste (Figure 3). In Table 1 shown hereinafter, the column on the left lists some of the odorous compounds detected in the gas being considered, while the columns on the right list the contents of the solid food matrices used in each column. In the table, the "X" sign indicates, for each matrix, the presence of the adsorbed compounds indicated in the left column, measured according to the gas chromatography (GC) and GC-mass technique on the head space of the respective food matrix after the passage of the gas. It can be seen that some matrices have affinity for some compounds and not for others in a selective manner. For example, starch is the only matrix, among the listed ones, that retains the last six compounds and more generally is also the matrix with the largest number of retained compounds (17 in all). Starch, cyclodextrin and soluble coffee further retain some sulfurate compounds which are indicators of freshness in coffee.

In the case of soluble coffee, the product treated according to the invention has a richer aroma spectrum or has the same aromatic substances but in a higher concentration.

**TABLE 1**

| **Compound** | **Starch** | **Alginate** | **Carrageenan** | **Cyclodextrin** | **Soluble coffee** |
|---|---|---|---|---|---|
| Isobutanal | X | X | | | X |
| Valeraldehyde | X | | X | | X |
| 2-methylbutanal | | X | X | | X |
| 3-methylbutanal | X | X | X | X | X |
| 2-butanone | | X | | X | X |
| Diacetyl | X | X | X | X | X |
| 2,3-pentanedione | X | X | | X | X |
| Pyridine | X | X | X | X | |
| Pyrazine | X | X | | | |
| Methylpyrazine | X | X | X | X | |
| Furan | X | X | | | |
| 3-2H-furanone | X | | X | X | |
| Methylpyrrole | | X | | X | X |
| H₂S | X | | | X | |
| 2-methylpropanal | | | | X | |
| 2-methylfuran | | | X | | |
| Dimethyldisulfide | | | | X | X |
| Ethanol | | | | X | |
| 3-methylfuran | | X | | | |
| Hexanal | | X | | | |
| Butyrolactone | X | | | | |
| 1,2-propenediol-3-methoxy | X | | | | |
| 2,6-dimethylpyrazine | X | | | | |
| 2,5-dimethylpyrazine | X | | | | |
| Dimethylsulfide | X | | | | |
| Thiopropane | X | | | | |

In practice it has been found that the apparatus according to the invention fully achieves the intended aim and objects, since the use of solid food matrices allows simple and inexpensive recovery of the odorous compounds from food products, which normally would be lost, without resorting to devices and technologies of high complexity or cost and in bland operating conditions in terms of pressure and temperature.

Moreover, it has been observed that the apparatus according to the invention allows to trap selectively groups of different compounds, so as to allow the creation of suitable aromas for specific foods, by way of the use of systems with a plurality of columns in series, each containing a different food matrix, or columns filled with a plurality of matrices.

It has also been observed that the apparatus according to the invention advantageously achieves the aim of leading to a release into the atmosphere of a smaller amount of gases which can pollute, since the food matrices are capable of adsorbing and removing from the gas in input a wide range of volatile organic compounds and inorganic compounds and at the same time the use of adsorption systems for carbon dioxide and carbon monoxide traps these gases before they are released into the atmosphere.

Moreover, the apparatus according to the invention is effective in providing a system which can be adapted easily to different food production plants thanks to its modular form with which its separate elements can be connected and disconnected from the pneumatic circuit according to the requirements.

Finally, the apparatus according to the invention allows to trap the odorous compounds and optionally store them for subsequent use, since the food matrices on which the odorous compounds have been adsorbed can be used as aromatizers.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for cryocondensation of aromas, comprising a chamber containing a gas that originates from a process for treating a food product, and a cryocondensation device which has an inlet for said gas arriving from a process for treating a food product and an outlet for a cryocondensed gas derived from said input gas, **characterized in that** it comprises an adsorption column for carbon dioxide which is connected to said inlet so as to remove the carbon dioxide from said input gas.

2. The apparatus according to claim 1, wherein the adsorption column for carbon dioxide comprises an adsorbent matrix which is specific for carbon dioxide.

3. The apparatus according to claim 2, wherein the adsorbent matrix which is specific for carbon dioxide is selected from the group consisting of ascarite, soda lime, sodium hydroxide on granular silica (decarbite®), a natural zeolite, aluminum oxide, a clay, an activated charcoal and silica.

4. The apparatus according to claim 3, wherein the natural zeolite is selected from the group consisting of mordenite and erionite.

5. The apparatus according to claim 3, wherein the clay is an activated clay.

6. The apparatus according to any of the preceding claims, wherein the adsorption column for carbon dioxide comprises an outer cooling jacket.

7. The apparatus according to any of the preceding claims, wherein the food product is selected from the group consisting of roasted coffee, roasted and ground coffee, roasted cocoa, roasted and ground cocoa, roasted nuts, bakery products and fruit.

## Patentansprüche

1. Vorrichtung zur Kryokondensation von Aromen, umfassend eine Kammer, die ein Gas, das von einem Prozess zum Behandeln eines Lebensmittels stammt, enthält, und eine Kryokondensationsvorrichtung, die einen Einlass für das Gas, das von dem Prozess zum Behandeln eines Nahrungsmittels stammt und einen Auslass für ein kryokondensiertes Gas, das aus dem Einsatzgas gewonnen wurde, umfasst, **dadurch gekennzeichnet, dass** sie eine Adsorptionssäule für Kohlenstoffdioxid umfasst, welche mit dem Einlass verbunden ist, um das Kohlenstoffdioxid aus dem Einsatzgas zu entfernen.

2. Vorrichtung nach Anspruch 1, wobei die Adsorptionssäule für Kohlenstoffdioxid eine Kohlenstoffdioxid-spezifische Adsorptionsmatrix umfasst.

3. Vorrichtung nach Anspruch 2, wobei die Kohlenstoffdioxid-spezifische Adsorptionsmatrix ausgewählt ist aus der Gruppe, die aus Ascarite, Natronkalk, Natriumhydroxid auf granularer Kieselsäure (decarbite®), einem natürlichen Zeolith, Aluminiumoxid, einem Ton, Aktivkohle und Kieselsäure besteht.

4. Vorrichtung nach Anspruch 3, wobei der natürliche Zeolith aus der Gruppe ausgewählt ist, die aus Mordenit und Erionit besteht.

5. Vorrichtung nach Anspruch 3, wobei der Ton ein aktivierter Ton ist.

6. Vorrichtung nach einem der vorstehenden Ansprüche, wobei die Adsorptionssäule für Kohlenstoffdioxid einen äußeren Kühlmantel umfasst.

7. Vorrichtung nach einem der vorstehenden Ansprüche, wobei das Nahrungsmittel ausgewählt ist aus der Gruppe, die aus geröstetem Kaffee, geröstetem und gemahlenem Kaffee, geröstetem Kakao, geröstetem und gemahlenem Kakao, gerösteten Nüssen, Backwaren und Früchten besteht.

## Revendications

1. Dispositif pour la cryocondensation d'arômes, comprenant une chambre contenant un gaz qui est issu d'un procédé pour traiter un produit alimentaire, et un dispositif de cryocondensation qui a une entrée pour ledit gaz provenant d'un procédé pour traiter un produit alimentaire et une sortie pour un gaz cryocondensé dérivé dudit gaz introduit, **caractérisé en ce qu'**il comprend une colonne d'adsorption pour le dioxyde de carbone, qui est connectée à ladite entrée de façon que le dioxyde de carbone soit retiré dudit gaz introduit.

2. Dispositif selon la revendication 1, dans lequel la colonne d'adsorption pour le dioxyde de carbone comprend une matrice adsorbante qui est spécifique pour le dioxyde de carbone.

3. Dispositif selon la revendication 2, dans lequel la matrice adsorbante qui est spécifique pour le dioxyde de carbone est choisie dans l'ensemble constitué par l'ascarite, la chaux sodée, l'hydroxyde de sodium sur silice granulaire (Decarbite®), une zéolite naturelle, l'oxyde d'aluminium, une argile, un charbon activé, et la silice.

4. Dispositif selon la revendication 3, dans lequel la zéolite naturelle est choisie dans l'ensemble constitué par la mordénite et l'érionite.

5. Dispositif selon la revendication 3, dans lequel l'argile est une argile activée.

6. Dispositif selon l'une quelconque des revendications précédentes, dans lequel la colonne d'adsorption pour le dioxyde de carbone comprend une chemise de refroidissement extérieure.

7. Dispositif selon l'une quelconque des revendications précédentes, dans lequel le produit alimentaire est choisi dans l'ensemble constitué par le café torréfié, le café torréfié et moulu, le cacao torréfié, le cacao torréfié et moulu, les noix grillées, les produits de boulangerie, et les fruits.
